(19) **Europäisches Patentamt European Patent Office Office européen des brevets**

(11) **EP 1 851 495 B1**

(12) ## EUROPEAN PATENT SPECIFICATION

(45) Date of publication and mention
of the grant of the patent:
**08.09.2010 Bulletin 2010/36**

(21) Application number: **06724883.1**

(22) Date of filing: **24.02.2006**

(51) Int Cl.:
*F25J 3/02* (2006.01)       *B01D 45/16* (2006.01)
*B01D 53/24* (2006.01)       *B01D 53/00* (2006.01)
*F25B 9/04* (2006.01)

(86) International application number:
**PCT/EP2006/060260**

(87) International publication number:
**WO 2006/089948 (31.08.2006 Gazette 2006/35)**

(54) **METHOD AND SYSTEM FOR COOLING A NATURAL GAS STREAM AND SEPARATING THE COOLED STREAM INTO VARIOUS FRACTIONS**

VERFAHREN UND SYSTEM ZUR KÜHLUNG EINES ERDGASSTROMS UND TRENNUNG DES GEKÜHLTEN STROMS IN VERSCHIEDENE TEILE

PROCEDE ET SYSTEME PERMETTANT DE REFROIDIR UN FLUX DE GAZ NATUREL ET DE SEPARER LE FLUX REFROIDI EN DIVERSES FRACTIONS

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.02.2005 EP 05101420**

(43) Date of publication of application:
**07.11.2007 Bulletin 2007/45**

(73) Proprietor: **TWISTER B.V.**
**2289 CC Rijswijk (ZH) (NL)**

(72) Inventors:
• **BETTING, Marco**
  **NL-2289 CC Rijswijk (NL)**
• **BROUWER, Jacob Michiel**
  **NL-2289 CC Rijswijk (NL)**

• **VAN ECK, Pascal**
  **NL-2289 CC Rijswijk (NL)**
• **TJEENK WILLINK, Cornelis Antonie**
  **NL-2289 CC Rijswijk (NL)**

(74) Representative: **Swinkels, Bart Willem et al**
**Nederlandsch Octrooibureau**
**P.O. Box 29720**
**2502 LS Den Haag (NL)**

(56) References cited:
WO-A-03/029739          WO-A-2004/001260
US-A- 3 296 807          US-A- 3 775 988
US-A- 4 140 504          US-A- 4 185 977
US-A- 5 615 561          US-A1- 2002 189 443
US-A1- 2005 045 033

**Description**

The invention relates to a method and system for cooling a natural gas stream and separating the cooled gas stream into various fractions, such as methane, ethane, propane, butane and condensates.

In the oil & gas industry natural gas is produced, processed and transported to its end-users.

Gas processing may include the liquefaction of at least part of the natural gas stream. If a natural gas stream is liquefied then a range of so called Natural Gas Liquids (NGL's) is obtained, comprising Liquefied Natural Gas or LNG (which predominantly comprises methane or ($C_1$ or $CH_4$), Ethane ($C_2$), Liquefied Petrol Gas or LPG (which predominantly comprises propane and butane or $C_3$ and $C_4$) and Condensate (which predominantly comprise $C_5$+ fractions).

If the gas is produced and transported to regional customers via a pipe-line (grid), the heating value of the gas is limited to specifications. For the richer gas streams this requires midstream processing to recover $C_2$+ liquids, which are sold as residual products.

If regional gas production outweighs regional gas consumption, expensive gas transmission grids cannot be justified, hence the gas may be liquefied to LNG, which can be shipped as bulk. In producing $C_1$ liquids, $C_2$+ liquids are produced concurrently and sold as byproducts.

Traditional NGL recovery plants are based on cryogenic cooling processes as to condense the light ends in the gas stream. These cooling processes comprise: Mechanical Refrigeration (MR), Joule Thompson (JT) expansion and Turbo expanders (TE), or a combination (e.g. MR-JT). These NGL recovery processes have been optimised over decades with respect to specific compression duty (i.e. MW/tonne NGL/hr). These optimisations often include: 1) smart exchange of heat between different process streams, 2) different feed trays in the fractionation column and 3) lean oil rectification (i.e. column reflux).

Most sensitive to the specific compression duty is the actual operating pressure of the fractionation column. The higher the operating pressure the lower the specific compression duty, but also the lower the relative volatility between the components of fractionation (e.g. $C_1$ - $C_2$+ for a de-methanizer, $C_2$- - $C_3$+ for a de-ethanizer etc.), which results in more trays hence larger column and/or less purity in the overhead stream.

European patent 0182643 and US patents 4,061,481; 4,140,504; 4,157,904; 4,171,964 and 4,278,457 issued to Ortloff Corporation disclose various methods for processing natural gas streams wherein the gas stream is cooled and separated into various fractions, such as methane, ethane, propane, butane and condensates.

A disadvantage of the known cooling and separation methods is that they comprise bulky and expensive cooling and refrigeration devices, which have a high energy consumption. These known methods are either based on isenthalpic cooling methods (i.e. Joule Thompson cooling, mechanical refrigeration) or near isentropic cooling methods (i.e. turbo-expander, cyclonic expansion and separation devices). The near isentropic methods are most energy efficient though normally most expensive when turbo expanders are used. However, cyclonic expansion and separation devices are more cost effective while maintaining a high-energy efficiency, albeit less efficient than a turbo expander device. Using a cost effective cyclonic expansion and separation devices, in combination with an isenthalpic cooling cycle (e.g. external refrigeration cycle) can restore the maximum obtainable energy efficiency.

US-A 3 296 807 describes a method for cooling a natural gas stream and separating the cooled gas stream. The method comprises cooling the gas stream, separating the cooled gas stream in an inlet separation tank, feeding at least part of the stream from the inlet separation tank into a cyclonic expansion and separation device. The cyclonic expansion and separation device comprises an assembly of swirl imparting vanes for imposing a swirling motion. Also, the cyclonic expansion and separation device comprises a nozzle through which the fluid fraction is accelerated and expanded and thereby further cooled such that centrifugal forces separate the swirling fluid.

It is therefore an object of the present invention to provide a method and system for cooling and separating a natural gas stream, which is more energy efficient, less bulky and cheaper than the known methods.

SUMMARY OF THE INVENTION

In accordance with the invention there is provided a method and a system for cooling a natural gas stream and separating the cooled gas stream into various fractions having different boiling points according to claims 1 and 5 respectively.

Preferably the natural gas stream is cooled in a heat exchanger assembly comprising a first heat exchanger and a refrigerator such that the methane enriched fluid fraction supplied to an inlet of the cyclonic expansion and separation device has a temperature between -20 and -60 degrees Celsius, and the cooled methane rich fraction discharged by the cyclonic expansion and separation device is induced to pass through the first heat exchanger to cool the gas stream.

It is also preferred that the heat exchanger assembly further comprises a second heat exchanger in which the cooled natural gas stream discharged by the first heat exchanger is further cooled before feeding the natural gas stream to the refrigerator, and that cold fluid from a bottom section of the fractionating column is supplied to the second heat exchanger for cooling the natural gas stream within the second heat exchanger.

It is furthermore preferred that a cyclonic expansion and separation device is used which is manufactured by the company Twister B.V. and sold under the trademark "Twister". Various embodiments of this cyclonic expansion and separation device are disclosed in International patent application WO 03029739, European patent 1017465 and US patents 6524368 and 6776825. The cooling inside the cyclonic expansion and separation device apparatus may be established by accelerating the feed stream within the nozzle to transonic or supersonic velocity. At transonic or supersonic condition the pressure will drop to typically a factor 1/3 of the feed pressure, meanwhile the temperature will drop to typically a factor 3/4 with respect to the feed temperature. The ratio of T-drop per unit P-drop for a given feed composition is determined with the isentropic efficiency of the expansion, which would be at least 80%. The isentropic efficiency expresses the frictional and heat losses occurring inside the cyclonic expansion and separation device.

These and other embodiments, features and advantages of the method and system according to the invention are disclosed in the accompanying drawings and are described in the accompanying claims, abstract and following detailed description of preferred embodiments of the method and system according to the invention in which reference is made to the accompanying drawings.

BRIEF DESCRIPTION OF THE DRAWING

FIG.1 is a flow scheme of a method and system for cooling and fractionating a natural gas stream in accordance with the invention.

FIG.2A depicts a longitudinal sectional view of a cyclonic expansion and separation device provided by a JT throttling valve, which is equipped with fluid swirling means;

FIG. 2B depicts at an enlarged scale a cross-sectional view of the outlet channel of the throttling valve of FIG.1A;

FIG. 2C illustrates the swirling motion of the fluid stream in the outlet channel of the throttling valve of FIG.2A and 2B;

FIG.2D illustrates the concentration of liquid droplets in the outer periphery of the outlet channel of the throttling valve of FIG. 2A and 2B;

DETAILED DESCRIPTION OF A PREFERRED EMBODIMENT

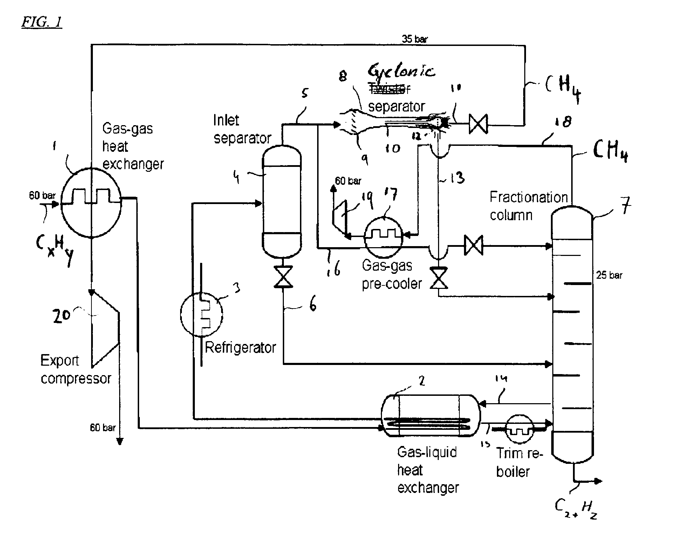

Fig.1 illustrates a flow scheme of a method and system according to the invention for cooling and fractionating a natural gas stream.

The natural gas $C_xH_y$ stream has a pressure of about 60 bar when it enters a first gas-gas heat exchanger 1. The natural gas stream is subsequently cooled in a second heat exchanger 2 and thereafter in a refrigerator 3. The cooled natural gas stream discharged by the second heat exchanger 2 is separated in an inlet separator 4 into a methane enriched fraction 5 and a methane depleted fraction 6.

The methane depleted fraction 6 is fed into a fractionating column 7, whereas the methane enriched fraction 5 is fed into a cyclonic expansion and separation device 8.

The cyclonic expansion and separation device 8 comprises swirl imparting vanes 9, a nozzle 10 in which the swirling fluid mixture is accelerated to a transonic or supersonic velocity, a central primary fluid outlet 11 for discharging a methane rich fluid fraction $CH_4$ from the separator 8 and an outer secondary fluid outlet 12 for discharging a condensables enriched and methane lean secondary fluid fraction into a conduit 13. The secondary fluid fraction is fed via conduit 13 into the fractionating column 7.

The first heat exchanger 1 is a gas-gas heat exchanger wherein the natural gas stream $CH_4$ is cooled with the lean primary gas stream $CH_4$ discharged from the central primary outlet 11 of the cyclonic expansion and separation device 8. The pre-cooled feed stream discharged by the first heat exchanger 1 is further cooled in the second heat exchanger 2, which may be a gas-liquid heat exchanger which is cooled by feeding it with liquids of one or more of the bottom trays of the fractionation column 7 as illustrated by arrows 14 and 15. The pre-cooled natural gas feed stream is then super-cooled in the refrigerator 3, which is driven by a cooling machine (either a mechanical refrigerator or absorption cooling machine).

The liquids formed during this 3-stage pre-cooling route are separated from a still gaseous methane enriched fraction in the inlet separator 4, and fed to one of the lower trays in the fractionating column 7 since it contains all heavy ends present in the feed (i.e. $C_4$+).

The gas coming over the top of said inlet separator is lean with respect to the heavier hydrocarbons (e.g. contains mostly $C_4$-). The deep NGL extraction (e.g. $C_2$ - $C_4$) is done in the cyclonic expansion and separation device 8, where the gas is expanded nearly isentropically. Inside the cyclonic expansion and separation device 8 the temperature drops further to cryogenic conditions where nearly all $C_2$+ components are liquefied and separated. With the cryogenic separation inside the cyclonic expansion and separation device 8 $C_1$ gas slips along with the $C_2$+ liquids. A certain mole fraction of $C_1$ will dissolve in the $C_2$+ liquids. This $C_2$+ rich stream is fed to the fractionation column 7 where a sharp cut between light and heavy ends is established e.g. $C_1$ - $C_2$+ (demethanizer), $C_2$- - $C_3$+ (de-ethanizer) etc.

In order to establish a pure top product from the fractionation column 7, a lean liquid reflux is created to absorb the lightest component which ought to leave the bottom of the column (e.g. $C_2$ for a de-methanizer). Said reflux stream is created by taking a side stream 16 from the cyclonic expansion and separation device 8 feed whilst subsequently cooling this side stream in a gas-gas pre cooler 17 with the overhead gas stream 18 (i.e. top product CH$_4$) of the fractionating column 7 and isenthalpically expanding the pre-cooled side stream 16 to the column pressure. During this isenthalpic expansion almost all hydrocarbons do liquefy and are fed as reflux to the top tray of the fractionating column 7.

The C$_1$ gas flows produced from: 1) the primary fluid outlet 11 cyclonic expansion and separation device 8 (typically 80% primary flow) and 2) the top outlet conduit 18 of the fractionating column 7 (typically 20% secondary flow), are compressed separately in export compressors 19 and 20 to an export pressure of about 60 bar. In the example shown the export pressure is about equal to the feed pressure of the natural gas stream CH$_4$ at the inlet of the first heat exchanger 1. Both export compressors 19 and 20 therefore compensate the frictional and heat losses occurring in the cyclonic expansion and separation device 8. These losses are higher if the expansion in the cyclonic expansion and separation device 8 is deeper, hence the export compressor duties are proportionally higher. The mechanical duty of the refrigerator 3 is mainly proportional with the difference between the high condenser temperature (T$_{cond}$) and the low evaporator temperature (T$_{evap}$). If T$_0$ denotes ambient temperature then: T$_{cond}$>T$_0$>T$_{evap}$. In general this leads to the expression of the Carnot efficiency or the theoretical maximum cooling duty per unit mechanical duty of the refrigerator 3:

$$C.O.P_{Carnot} = \frac{\dot{Q}_{cooling}}{\dot{W}_{refrig}} = \frac{T_{evap}}{T_{cond} - T_{evap}}$$

For a propane refrigerator cycle with T$_{evap}$ = -30 °C and T$_{cond}$ = 40°C, the Carnot C.O.P equals 3.5. In a real cooling machine, losses will diminish the C.O.P such that: C.O.P$_{actual}$ ≈ 2.5. So for each MW compressor duty, 2.5 MW cooling duty can be obtained.

For a feed stream of 10 kg/s and a specific heat of 2.5 kJ/kg.K, one degree cooling requires 25 kW/K cooling duty. Hence, a cooling from -20 °C → -30 °C would require a cooling duty of 250 kW. For a evaporator temperature of -30 °C this corresponds with a mechanical duty of the refrigerator of 100 kW. If said additional cooling of 10 °C would be established through extra expansion in a cyclonic expansion and separation device, the expansion ratio (P/P$_{feed}$) needs to decrease from default 0.3 → 0.25 (i.e. deeper expansion). This results in a larger pressure loss over the cyclonic expansion and separation device 8, hence an additional export compressor duty of approx. 200 kW.

If the evaporator temperature of the refrigerator 3 is chosen in the cryogenic range, comparable to NGL reflux temperatures, i.e. T$_{evap}$ = -70 °C, the C.O.P.$_{actual}$ of the cooling machine drops to ≈1.3. As a consequence a cooling from -60 °C → -70 °C still requires 250 kW cooling duty, though this corresponds with an mechanical duty of the refrigerator of 192 kW. If this additional cooling would be obtained in the cyclonic expansion and separation device 8 then the expansion ratio still decreases from 0.3 → 0.25, though the extra required compressor duty is reduced from 200 kW to 170 kW. This is mainly explained by the fact that the duty of any compressor is less at lower suction temperature, hence also the additional duty.

Concluding from the above: For the temperature trajectory -20 °C → -30 °C it is more efficient to get additional cooling from the refrigerator 3 than from a deeper expansion in the cyclonic expansion and separation device 8. The opposite holds for the temperature trajectory -60 °C → -70 °C as the COP of the cooling machine of the refrigerator 3 drops progressively with lower temperatures, requiring more refrigerator duty. As a consequence, for the combined cyclonic expansion and separation device-refrigerator cycle 3,8 an optimum can be found for the cooling duty per unit mechanical duty by making a distinct division of the mechanical duties between 1) the feed compressor and 2) the compressor of the cooling machine of the refrigerator 3.

The cooling inside the cyclonic expansion and separation device 8 may be established by accelerating the feed stream within the nozzle 10 to transonic or supersonic velocity. At transonic or supersonic condition the pressure has dropped to typically a factor 1/3 of the feed pressure, meanwhile the temperature drops to typically a factor 3/4 with respect to the feed temperature. The ratio of T-drop per unit P-drop for a given feed composition is determined with the isentropic efficiency of the expansion, which would be ≥ 80%. The isentropic efficiency expresses the frictional and heat losses occurring inside the cyclonic expansion and separation device.

At the expanded state inside the cyclonic expansion and separation device 8, the majority of the C$_2$+ components are liquefied in a fine droplet dispersion and separated via the outer secondary fluid outlet 12. The expansion ratio (P/P$_{feed}$) is chosen such that at least the specified C$_x$H$_y$ recovery is condensed into liquid inside the nozzle 10. Beyond the nozzle 10 in which the fluid stream is accelerated and thereby expanded and cooled the flow inside the cyclonic expansion and separation device 8 is split into a liquid enriched C$_2$+ flow (approx. 20 mass%) and a liquid lean C$_1$ flow (approx. 80% masts%).

The C$_1$ main flow is decelerated in a diffuser within the central fluid outlet 11, resulting in a rise of pressure and temperature. The P-rise and the accompanied T-rise in the diffuser is determined with both the isentropic efficiency of the expansion and the isentropic efficiency of the recompression. The isentropic efficiency of expansion, determines the remaining kinetic energy at the entrance of the diffuser, whereas the isentropic efficiency of recompression is determined with the losses inside the diffuser embodiment. The isentropic efficiency of recompression for the cyclonic expansion and separation device is approximately 85%. The resulting outlet pressure of the $C_1$ main flow is therefore lower than the feed pressure though higher than the outlet pressure of the $C_2$+ wet flow, which equals the fractionating column operating pressure.

As a result of the recompression, the temperature of the $C_1$ main flow is higher than the temperature in the top of the fractionation column. Hence, the potential duty of this $C_1$ main flow to pre-cool the feed is limited. The latter is an inherent limitation of a transonic or supersonic cyclonic expansion and separation device. The inherent efficiency of the cyclonic expansion and separation device is that it produces a concentrated supercooled $C_2$+ wet flow feeding the fractionating column. Both the reduced flow rate feeding the fractionating column and the relatively low temperature enables the separation process in the column. For an LPG scheme comprising a cyclonic expansion and separation device the optimisation of the $C_2$+ recovery is found in creating a deeper expansion in the cyclonic expansion and separation device (i.e decrease of the ratio $P/P_{feed}$) and/or in the reduction of slip gas flow which comes along with the $C_2$+ wet flow. Both measures will result in an increase of the pressure loss, which needs to be compressed to export pressure.

It is preferred that from thermodynamic simulations an optimum for the $C_2$+ yield/MW compressor duty, is assessed for a certain duty of the refrigeration compressor versus the duty of the export compressor to compensate for the pressure loss in the cyclonic expansion and separation device. Said combined cycle compensates for the deficiency of limited pre-cooling. The evaporator of the refrigeration cycle may be connected to the inlet of cyclonic expansion and separation device 8 as to supercool the feed stream.

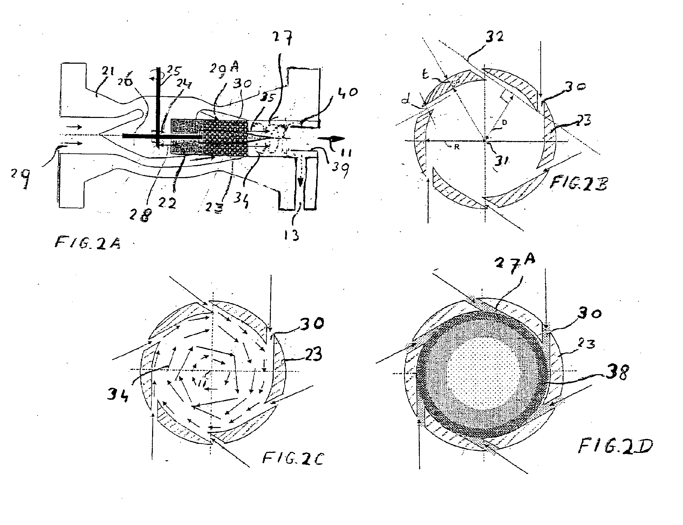

FIG.2A-2D depict a Joule Thomson (JT) or other throttling valve, which is equipped with fluid swirling means which may be used as an alternative to the cyclonic expansion and separation device 8 depicted in FIG.1.

The JT throttling valve shown in FIG.2A-2D has a valve geometry that enhances the coalescence process of droplets formed during the expansion along the flow path of a Joule-Thomson or other throttling valve. These larger droplets are better separable than would be the case in traditional Joule-Thomson or other throttling valves. For tray columns this reduces the entrainment of liquid to the upper trays and hence improves the tray-efficiency.

The valve shown in FIG.2A comprises a valve housing 21 in which a piston-type valve body 22 and associated perforated sleeve 23 are slideably arranged such that by rotation of a gear wheel 24 at a valve shaft 25 a teethed piston rod 26 pushes the piston type valve body up and down into a fluid outlet channel 27 as illustrated by arrow 28. The valve has an fluid inlet channel 29 which has an annular downstream section 29A that may surround the piston 22 and/or perforated sleeve 23 and the flux of fluid which is permitted to flow from the fluid inlet channel 29 into the fluid outlet channel 27 is controlled by the axial position of the piston-type valve body 22 and associated perforated sleeve 23. The perforated sleeve 23 comprises tilted, non-radial perforations 30 which induce the fluid to flow in a swirling motion within the fluid outlet channel 27 as illustrated by arrow 34. A bullet-shaped vortex guiding body 35 is secured to the piston-type valve body 22 and arranged coaxially to a central axis 31 within the interior of the perforated sleeve 3 and of the fluid outlet channel 27 to enhance and control the swirling motion 34 of the fluid stream in the outlet channel 27.

The fluid outlet channel 27 comprises a tubular flow divider 39 which separates a primary fluid outlet conduit 11 for transporting a methane enriched fraction back to the first heat exchanger 1 shown in FIG.1 from an annular secondary fluid outlet 40 for transporting a methane depleted fraction via conduit 13 to the fractionating column 7 shown in FIG.1.

FIG.2B illustrates in more detail that the tilted or non-radial perforations 30 are cylindrical and drilled in a selected partially tangential orientation relative to the central axis 31 of the fluid outlet channel 27 such that the longitudinal axis 32 of each of the perforations 30 crosses the central axis 31 at a distance D, which is between 0.2 and 1, preferably between 0.5 and 0.99, times the internal radius R of the sleeve 23.

In FIG.2B the nominal material thickness of the perforated sleeve 23 is denoted by t and the width of the cylindrical perforations 30 is denoted by d. In an alternative embodiment of the valve according to the invention the perforations 30 may be non-cylindrical, such as square, rectangular or star-shaped, and in such case the width d of the perforations 30 is an average width defined as four times the cross-sectional area of the perforation 30 divided by the perimeter of the perforation 30. It is preferred that the ratio d/t is between 0.1 and 2, and more preferably between 0.5 and 1.

The tilted perforations 30 create a swirling flow in the fluid stream flowing through the fluid outlet channel 27 as illustrated by arrow 34. The swirling motion may also be imposed by a specific geometry of the valve trim and/or swirl guiding body 35. In the valve according to the invention the available free pressure is used for isenthalpic expansion to create a swirling flow in the fluid stream. The kinetic energy is then mainly dissipated through dampening of the vortex along an extended pipe length downstream the valve.

FIG.2C and 2D illustrate that the advantage of creating a swirling flow in the outlet channel of the valve is twofold:

1. Regular velocity pattern -> less interfacial shear -> less droplet break-up -> larger drops
2. Concentration of droplets in the outer circumference 27A of the flow area of the fluid outlet channel 27 -> large number density -> improved coalescence -> larger drops 38.

Although any Joule-Thomson or other choke and/or throttling type valve may be used to create a swirling flow in the cyclonic expansion and separation device in the method according to the invention, it is preferred to use a choke-type throttling valve as supplied by Mokveld Valves B.V. and disclosed in their International patent application WO2004083691.

It will be understood that each cooling & separation method applied in NGL recovery systems, has its distinctive optimum with respect to energy efficiency. It is also noted that the near isentropic cooling methods are more energy efficient than isenthalpic methods and that from the isentropic cooling methods cyclonic expansion devices are more cost effective than turbo expander machines, albeit less energy efficient. In accordance with the invention it has been surprisingly discovered that the combination of an isenthalpic cooling cycle (such as a mechanical refrigerator) and a near isentropic cooling method, through a cyclonic expansion and separation devices, yields a synergy with respect to energy efficiency i.e. total duty per unit volume NGL produced. It will be understood that the different cyclonic expansion and separation devices, yield different isentropic efficiencies.

The nozzle assembly of the cyclonic expansion and separation device according to the invention comprises an assembly of swirl imparting vanes arranged upstream of the nozzle, and yields an isentropic efficiency of expansion $\geq 80\%$, whereas other cyclonic expansion and separation devices with a tangential inlet section and using a counter current vortex flow (e.g. Ranque Hilsch vortex tubes) having a substantial lower isentropic efficiency of expansion $<60\%$.

**Claims**

1. A method for cooling a natural gas stream and separating the cooled gas stream into various fractions having different boiling points, such as methane, ethane, propane, butane and condensates, the method comprising:

    - cooling the gas stream in at least one heat exchanger assembly (1,2,3);
    - separating the cooled gas stream in an inlet separation tank (4) into a methane enriched fluid fraction (5) and a methane depleted fluid fraction (6);
    - feeding the methane depleted fluid fraction (6) from the inlet separation tank (4) into a fractionating column (7) in which a methane rich fluid fraction is separated from a methane lean fluid fraction;
    - feeding at least part of the methane enriched fluid fraction (5) from the inlet separation tank (4) into a cyclonic expansion and separation device (8) in which said fluid fraction is expanded and thereby further cooled and separated into a methane rich substantially gaseous fluid fraction (11) and a methane depleted substantially liquid fluid fraction (13), and
    - feeding the methane depleted fluid fraction (13) from the cyclonic expansion and separation device (8) into the fractionating column (7) for further separation,
    - wherein the cyclonic expansion and separation device (8) comprises:

        a) an assembly of swirl imparting vanes (9) for imposing a swirling motion on the methane enriched fluid fraction (5), which vanes (9) are arranged upstream of a nozzle (10) in which the methane enriched fluid fraction (5) is accelerated and expanded and thereby further cooled such that centrifugal forces separate the swirling fluid stream into said methane rich substantially gaseous fluid fraction (11) and said methane depleted substantially liquid fluid fraction (13) and which swirl imparting vanes (9) protrude in an at least partially radial direction from a torpedo shaped central body upstream of the nozzle, having a larger outer diameter than the inner diameter of the nozzle (10), or
        b) a throttling valve, having an outlet section which is provided with swirl imparting means (23) that impose a swirling motion to the fluid stream flowing through the fluid outlet channel (27) thereby inducing liquid droplets to swirl towards the outer periphery of the fluid outlet channel (27) and to coalesce.

2. The method of claim 1, wherein the natural gas stream is cooled in a heat exchanger assembly comprising a first heat exchanger (1) and a refrigerator (3) such that the methane enriched fluid fraction (5) supplied to an inlet of the cyclonic expansion and separation device (8) has a temperature between -20 and -60 degrees Celsius, and wherein the cooled methane rich substantially gaseous fluid fraction (11) discharged by the cyclonic expansion and separation device (8) is induced to pass through the first heat exchanger (1) to cool the gas stream.

3. The method of claim 1 or 2, wherein the heat exchanger assembly further comprises a second heat exchanger (2) in which the cooled natural gas stream discharged by the first heat exchanger (1) is further cooled before feeding the natural gas stream to the refrigerator (3), and wherein cold fluid from a bottom section of the fractionating column (7) is supplied to the second heat exchanger (2) for cooling the natural gas stream within the second heat exchanger (2).

**4.** The method of claim 1, wherein the cyclonic expansion device (8) comprises a nozzle (10) and the isentropic efficiency of expansion in the nozzle (10) of the cyclonic expansion device (8) is at least 80%.

**5.** A system for cooling a natural gas stream and separating the cooled gas stream into various fractions having different boiling points, such as methane, ethane, propane, butane and condensates, the system comprising:

- at least one heat exchanger assembly (1,2,3) for cooling the natural gas stream;
- an inlet separation tank (4) for separating the cooled natural gas stream having an upper outlet for discharging a methane enriched fluid fraction (5) and a lower outlet for discharging a methane depleted fluid fraction (6);
- a fractionating column (7) which is connected to the lower outlet of the inlet separation tank (4) in which column at least some of the methane depleted fraction (6) discharged from the lower outlet of the inlet separation tank (4) is further separated into a methane rich fluid fraction and a methane lean fluid fraction;
- a cyclonic expansion and separation device (8) which is connected to the upper outlet of the inlet separation tank (4), in which device said methane enriched fluid fraction (5) is expanded and thereby further cooled and separated into a methane rich substantially gaseous fluid fraction (11) and a methane depleted substantially liquid fluid fraction (13), and
- a supply conduit for feeding the methane depleted substaritially liquid fluid fraction (13) from the cyclonic expansion and separation device (8) into the fractionating column (7) for further separation,
- wherein the cyclonic expansion and separation device (8) comprises:

a) an assembly of swirl imparting vanes (9) for imposing a swirling motion on the methane enriched fluid fraction (5), which vanes (9) are arranged upstream of a nozzle (10) in which the methane enriched fluid fraction (5) is accelerated and expanded and thereby further cooled such that centrifugal forces separate the substantially gaseous swirling fluid stream into said methane rich substantially liquid fluid fraction (11) and said methane depleted fluid fraction (13), and the cyclonic expansion and separation device (8) further comprises an assembly of swirl imparting vanes (9) which protrude in an at least partially radial direction from a torpedo shaped central body upstream of the nozzle, or

b) a throttling valve, having an outlet section which is provided with swirl imparting means (23) that impose a swirling motion to the fluid stream flowing through the fluid outlet channel (27) thereby inducing liquid droplets to swirl towards the outer periphery of the fluid out let channel (27) and to coalesce.

**6.** The system of claim 5, wherein the cyclonic expansion and separation device is a throttling valve comprising a housing (21), a valve body (22) which is movably arranged in the housing (21) such that the valve body (22) controls fluid flow from a fluid inlet channel (29) into the fluid outlet channel (27) of the valve further comprises a perforated sleeve (23) via which fluid flows from the fluid inlet channel (29) into the fluid outlet channel (27), if in use the valve body (22) permits fluid to flow from the fluid inlet channel (29) into the fluid outlet channel (27),
wherein at least some perforations (30) of the sleeve (23) have an at least partially tangential orientation relative to a longitudinal axis of the sleeve, sueh that the multiphase fluid stream is induced to swirl within the fluid outlet channel (27) and liquid droplets are induced to swirl towards the outer periphery of the fluid outlet channel (27) and to coalesce into enlarged liquid droplets.

**7.** The system of claim 6, wherein a gas-liquid separation assembly (39) is connected to the outlet channel (27) of the throttling valve, in which assembly liquid and gaseous phases of the fluid discharged by the valve are at least partly separated.

**8.** The system of claim 5, wherein the system further comprises a feed compressor and an air cooler that are arranged upstream of the first heat exchanger (1) of the at least one heat exchanger assembly.

**9.** The system of claim 5, wherein the system is provided with temperature control means which are configured to maintain the temperature within an inlet of the cyclonic expansion and separation device between -20 and -60 degrees Celsius.

**Patentansprüche**

**1.** Verfahren zur Kühlung eines Erdgasstroms und Trennung des gekühlten Gasstroms in verschiedene Fraktionen mit unterschiedlichen Siedepunkten, wie beispielsweise Methan, Ethan, Propan, Butan und Kondensate, wobei das Verfahren aufweist:

- Kühlen des Gasstroms in mindestens einer Wärmetauscheranordnung (1,2,3);
- Trennen des gekühlten Gasstroms in einem Einlaßtrennbehälter (4) in eine Methan angereicherte Fluidfraktion (5) und in eine Methan abgereicherte Fluidfraktion (6);

- Einspeisen der Methan abgereicherten Fluidfraktion (6) aus dem Einlaßtrennbehälter (4) in eine Fraktionierungssäule (7), in welcher eine Methan reiche Fluidfraktion von einer Methan armen Fluidfraktion getrennt wird;

- Einspeisen mindestens eines Teils der Methan angereicherten Fluidfraktion (5) aus dem Einlaßtrennbehälter (4) in eine Zyklonexpansions- und Trennvorrichtung (8), in welcher die Fluidfraktion expandiert wird und sich **dadurch** weiter abkühlt und in eine Methan reiche, im Wesentlichen gasförmige Fluidfraktion (11) und eine Methan abgereicherte, im Wesentlichen flüssige Fluidfraktion (13) getrennt wird, und

- Einspeisen der Methan abgereicherten Fluidfraktion (13) aus der Zyklonexpansions- und Trennvorrichtung (8) in die Fraktionierungssäule (7) für eine weitere Trennung,

- wobei die Zyklonexpansions- und Trennvorrichtung (8) aufweist:

    a) eine Anordnung von wirbelerzeugenden Flügelrädern (9) zum Übertragen einer Wirbelbewegung auf die Methan angereicherte Fluidfraktion (5), wobei die Flügelräder (9) stromaufwärts einer Düse (10) angeordnet sind, in welcher die Methan angereicherte Fluidfraktion (5) beschleunigt und expandiert wird und sich **dadurch** weiter abkühlt, so dass zentrifugale Kräfte den wirbelnden Fluidstrom in die Methan reiche, im Wesentlichen gasförmige Fluidfraktion (11) und die Methan abgereicherte, im Wesentlichen flüssige Fluidfraktion (13) trennen, und wobei die wirbelerzeugenden Flügelräder (9) in einer zumindest teilweisen radialen Richtung aus einem torpedoförmigen zentralen Körper stromaufwärts der Düse herausragen, mit einem Außendurchmesser, der größer ist als der Innendurchmesser der Düse (10), oder

    b) ein Drosselventil mit einem Auslassabschnitt, der mit wirbelerzeugenden Einrichtungen (23) versehen ist, die eine Wirbelbewegung auf den durch den Fluidauslasskanal (27) strömenden Fluidstrom übertragen, was bewirkt, dass Flüssigkeitströpfchen zur äußeren Peripherie des Fluidauslasskanals (27) wirbeln und sich vereinigen.

2. Verfahren nach Anspruch 1, wobei der Erdgasstrom in einer Wärmetauscheranordnung gekühlt wird, die einen ersten Wärmetauscher (1) und eine Kühlvorrichtung (3) aufweist, so dass die in einen Einlass der Zyklonexpansions- und Trennvorrichtung (8) eingespeiste, Methan angereicherte Fluidfraktion (5) eine Temperatur zwischen -20 und -60 Grad Celsius hat, und wobei die von der Zyklonexpansions- und Trennvorrichtung (8) ausgegebene, gekühlte, Methan reiche, im Wesentlichen gasförmige Fluidfraktion (11) durch den ersten Wärmetauscher (1) geleitet wird, um den Gasstrom zu kühlen.

3. Verfahren nach Anspruch 1 oder 2, wobei die Wärmetauscheranordnung außerdem einen zweiten Wärmetauscher (2) aufweist, in welchem der von dem ersten Wärmetauscher (1) ausgegebene, gekühlte Erdgasstrom weiter gekühlt wird, bevor der Erdgasstrom in die Kühlvorrichtung (3) eingespeist wird, und wobei das kalte Fluid aus einem Bodenabschnitt der Fraktionierungssäule (7) in den zweiten Wärmetauscher (2) eingespeist wird, um den Erdgasstrom in dem zweiten Wärmetauscher (2) zu kühlen.

4. Verfahren nach Anspruch 1, wobei die Zyklonexpansions- und Trennvorrichtung (8) eine Düse (10) aufweist und die isentropische Expansionsleistung in der Düse (10) der Zyklonexpansions- und Trennvorrichtung (8) mindestens 80% ist.

5. System zur Kühlung eines Erdgasstroms und Trennung des gekühlten Gasstroms in verschiedene Fraktionen mit unterschiedlichen Siedepunkten, wie beispielsweise Methan, Ethan, Propan, Butan und Kondensate, wobei das System aufweist:

    - mindestens eine Wärmetauscheranordnung (1,2,3) zum Kühlen des Erdgasstroms;

    - einen Einlasstrennbehälter (4) zum Trennen des gekühlten Erdgasstroms, mit einem oberen Auslass zur Ausgabe einer Methan angereicherten Fluidfraktion (5) und einem unteren Auslass zur Ausgabe einer Methan abgereicherten Fluidfraktion (6);

    - eine mit dem unteren Auslass des Einlasstrennbehälters (4) verbundene Fraktionierungssäule (7), in welcher mindestens ein Teil der aus dem unteren Auslass des Einlasstrennbehälters (4) ausgegebenen, Methan abgereicherten Fraktion (6) in eine Methan reiche Fluidfraktion und eine Methan arme Fluidfraktion weiter getrennt wird;

    - eine mit dem oberen Auslass des Einlasstrennbehälters (4) verbundene Zyklonexpansions- und Trennvorrichtung (8), in welcher die Methan angereicherte Fluidfraktion (5) expandiert wird und sich **dadurch** weiter abkühlt und in eine Methan reiche, im Wesentlichen gasförmige Fluidfraktion (11) und eine Methan abgereicherte, im Wesentlichen flüssige Fluidfraktion (13) getrennt wird, und

    - eine Speiseleitung zum Einspeisen der Methan abgereicherten, im Wesentlichen flüssigen Fluidfraktion (13) aus der Zyklonexpansions- und Trennvorrichtung (8) in die Fraktionierungssäule (7) für eine weitere Trennung,

- wobei die Zyklonexpansions- und Trennvorrichtung (8) aufweist:

a) eine Anordnung von wirbelerzeugenden Flügelrädern (9) zum Übertragen einer Wirbelbewegung auf die Methan angereicherte Fluidfraktion (5), wobei die Flügelräder (9) stromaufwärts einer Düse (10) angeordnet sind, in welcher die Methan angereicherte Fluidfraktion (5) beschleunigt und expandiert wird und sich **dadurch** weiter abkühlt, so dass zentrifugale Kräfte den wirbelnden Fluidstrom in die Methan reiche, im Wesentlichen gasförmige Fluidfraktion (11) und die Methan abgereicherte, im Wesentlichen flüssige Fluidfraktion (13) trennen, und wobei die Zyklonexpansions- und Trennvorrichtung (8) außerdem eine Anordnung von wirbelerzeugenden Flügelrädern (9) aufweist, die in einer zumindest teilweisen radialen Richtung aus einem torpedoförmigen zentralen Körper stromaufwärts der Düse herausragen, oder

b) ein Drosselventil mit einem Auslassabschnitt, der mit wirbelerzeugenden Einrichtungen (23) versehen ist, die eine Wirbelbewegung auf den durch den Fluidauslasskanal (27) strömenden Fluidstrom übertragen, was bewirkt, dass Flüssigkeitströpfchen zur äußeren Peripherie des Fluidauslasskanals (27) wirbeln und sich vereinigen.

6. System nach Anspruch 5, wobei die Zyklonexpansions- und Trennvorrichtung ein Drosselventil ist, das ein Gehäuse (21) aufweist, ein Ventilkörper (22), der in dem Gehäuse (21) beweglich angeordnet ist, so dass der Ventilkörper (22) den Fluidstrom aus einem Fluideinlasskanal (29) in den Fluidauslasskanal (27) des Ventils steuert, außerdem eine perforierte Manschette (23) aufweist, über welche Fluid aus dem Fluideinlasskanal (29) in den Fluidauslasskanal (27) strömt, wenn in Gebrauch der Ventilkörper (22) ein Strömen von Fluid aus dem Fluideinlasskanal (29) in den Fluidauslasskanal (27) erlaubt, wobei mindestens einige Perforationen (30) der Manschette (23) eine zumindest teilweise tangentiale Orientierung relativ zu einer Längsachse der Manschette haben, so dass ein Wirbeln des mehrphasigen Fluidstroms innerhalb des Fluidauslasskanals (27) hervorgerufen wird und ein Wirbeln von Flüssigkeitströpfchen zur äußeren Peripherie des Fluidauslasskanals (27) und ihre Vereinigung zu größeren Flüssigkeitstropfen hervorgerufen wird.

7. System nach Anspruch 6, wobei eine Gas/Flüssigkeit-Trennanordnung (39) mit dem Auslasskanal (27) des Drosselventils verbunden ist, wobei in der Anordnung flüssige und gasförmige Phasen des von dem Ventil ausgegebenen Fluids zumindest teilweise getrennt werden.

8. System nach Anspruch 5, wobei das System außerdem einen Speisekompressor und einen Luftkühler aufweist, die stromaufwärts des ersten Wärmetauschers (1) der mindestens einen Wärmetauscheranordnung angeordnet sind.

9. System nach Anspruch 5, wobei das System mit Temperatursteuereinrichtungen versehen ist, die dazu dienen, die Temperatur innerhalb eines Einlasses der Zyklonexpansions- und Trennvorrichtung zwischen -20 und -60 Grad Celsius zu halten.

**Revendications**

1. Procédé permettant de refroidir un flux de gaz naturel et de séparer le flux de gaz refroidi en diverses fractions ayant différents points d'ébullition, telles que méthane, éthane, propane, butane et condensats, le procédé consistant à :

- refroidir le flux de gaz dans au moins un ensemble échangeur thermique (1, 2, 3) ;
- séparer le flux de gaz refroidi dans un réservoir de séparation d'entrée (4) en une fraction de fluide enrichie en méthane (5) et une fraction de fluide appauvrie en méthane (6) ;
fournir la fraction de fluide appauvrie en méthane (6) issue du réservoir de séparation d'entrée (4) à une colonne de fractionnement (7) dans laquelle une fraction de fluide riche en méthane est séparée d'une fraction de fluide pauvre en méthane ;
- fournir au moins une partie de la fraction de fluide enrichie en méthane (5) issue du réservoir de séparation d'entrée (4) à un dispositif de dilatation et de séparation cyclonique (8) dans lequel ladite fraction de fluide est dilatée et de ce fait encore refroidie et séparée en une fraction de fluide gazeuse sensiblement riche en méthane (11) et une fraction de fluide liquide sensiblement appauvrie en méthane (13), et
- fournir la fraction de fluide appauvrie en méthane (13) issue du dispositif de dilatation et de séparation cyclonique (8) à la colonne de fractionnement (7) pour poursuivre la séparation, le dispositif de dilatation et de séparation cyclonique (8) comprenant :

a) un ensemble d'aubes imprimant un tourbillon (9) pour appliquer un mouvement tourbillonnant sur la fraction de fluide enrichie en méthane (5), lesquelles aubes (9) sont disposés en amont d'une buse (10) dans laquelle la fraction de fluide enrichie en méthane (5) est accélérée et dilatée et de ce fait encore refroidie de telle sorte que des forces centrifuges séparent le flux de fluide tourbillonnant en ladite fraction de fluide sensiblement gazeuse riche en méthane (11) et ladite fraction de fluide sensiblement liquide appauvrie en méthane (13) et lesquelles aubes (9) font saillie dans au moins une direction partiellement radiale par rapport à un corps central en forme d'ogive en amont de la buse, ayant un diamètre externe plus grand que le diamètre interne de la buse (10), ou

b) une vanne d'étranglement, ayant une section de sortie qui est dotée de moyens imprimant un tourbillon (23) qui appliquent un mouvement tourbillonnant au flux de fluide passant à travers le canal de sortie de fluide (27), amenant ainsi les gouttelettes de liquide à tourbillonner vers la périphérie externe du canal de sortie de fluide (27) et à coalescer.

2. Procédé selon la revendication 1, dans lequel le flux de gaz naturel est refroidi dans un ensemble échangeur thermique comprenant un premier échangeur thermique (1) et un réfrigérateur (3) de telle sorte que la fraction de fluide enrichie en méthane (5) fournie à une entrée du dispositif de dilatation et de séparation cyclonique (8) ait une température entre -20 et -60 degrés Celsius, et dans lequel la fraction de fluide sensiblement gazeuse riche en méthane refroidie (11) évacuée par le dispositif de dilatation et de séparation cyclonique (8) est amenée à passer à travers le premier échangeur thermique (1) pour refroidir le flux de gaz.

3. Procédé selon la revendication 1 ou 2, dans lequel l'ensemble échangeur thermique comprend en outre un second échangeur thermique (2) dans lequel le flux de gaz naturel refroidi déchargé par le premier échangeur thermique (1) est encore refroidi avant fourniture du flux de gaz naturel au réfrigérateur (3), et dans lequel le fluide froid issu d'une section inférieure de la colonne de fractionnement (7) est fourni au second échangeur thermique (2) pour refroidissement du flux de gaz naturel à l'intérieur du second échangeur thermique (2).

4. Procédé selon la revendication 1, dans lequel le dispositif de dilatation cyclonique (8) comprend une buse (10) et le rendement isentropique de la dilatation dans la buse (10) du dispositif de dilatation cyclonique (8) est d'au moins 80 %.

5. Système permettant de refroidir un flux de gaz naturel et de séparer le flux de gaz naturel en diverses fractions ayant différents points d'ébullition, telles que méthane, éthane, propane, butane et condensats, le système comprenant :

- au moins un ensemble échangeur thermique (1, 2, 3) pour refroidir le flux de gaz naturel ;
- un réservoir de séparation d'entrée (4) pour séparer le flux de gaz naturel refroidi ayant un orifice de sortie supérieur pour évacuer une fraction de fluide enrichie en méthane (5) et un orifice de sortie inférieur pour évacuer une fraction de fluide appauvrie en méthane (6) ;
- une colonne de fractionnement (7) qui est reliée à l'orifice de sortie inférieur du réservoir de séparation d'entrée (4), dans laquelle colonne au moins une partie de la fraction appauvrie en méthane (6) évacuée de l'orifice de sortie inférieur du réservoir de séparation d'entrée (4) est encore séparée en une fraction de fluide sensiblement gazeuse riche en méthane et une fraction de fluide sensiblement liquide pauvre en méthane ;
- un dispositif de dilatation et de séparation cyclonique (8) qui est relié à l'orifice de sortie supérieur du réservoir de séparation d'entrée (4), dans lequel dispositif ladite fraction de fluide enrichie en méthane (5) est dilatée et ainsi encore refroidie et séparée en une fraction de fluide sensiblement gazeuse riche en méthane (11) et une fraction de fluide sensiblement liquide appauvrie en méthane (13), et
- un conduit d'alimentation pour fournir la fraction de fluide sensiblement liquide appauvrie en méthane (13) issue du dispositif de dilatation et de séparation cyclonique (8) à la colonne de fractionnement (7) pour poursuivre la séparation,
- le dispositif de dilatation et de séparation cyclonique (8) comprenant :

a) un ensemble d'aubes imprimant un tourbillon (9) pour appliquer un mouvement tourbillonnant sur la fraction de fluide enrichie en méthane (5), lesquelles aubes (9) sont disposés en amont d'une buse (10) dans laquelle la fraction de fluide enrichie en méthane (5) est accélérée et dilatée et de ce fait encore refroidie de telle sorte que des forces centrifuges séparent le flux de fluide tourbillonnant en ladite fraction de fluide sensiblement gazeuse riche en méthane (11) et ladite fraction de fluide sensiblement liquide appauvrie en méthane (13), et le dispositif de dilatation et de séparation cyclonique (8) comprenant en outre un ensemble d'aubes imprimant un tourbillon (9) qui font saillie dans au moins une direction partiellement radiale d'un corps central en forme d'ogive en amont de la buse, ou

b) une vanne d'étranglement, ayant une section de sortie qui est dotée de moyens imprimant un tourbillon (23) qui appliquent un mouvement tourbillonnant au flux de fluide passant à travers le canal de sortie de fluide (27), amenant ainsi les gouttelettes de liquide à tourbillonner vers la périphérie externe du canal de sortie de fluide (27) et à coalescer.

6. Système selon la revendication 5, dans lequel le dispositif de dilatation et de séparation cyclonique est une vanne d'étranglement comprenant un logement (21), un corps de vanne (22) qui est disposé de façon mobile dans le logement (21) de telle sorte que le corps de vanne (22) contrôle l'écoulement de fluide depuis un canal d'entrée de fluide (29) dans le canal de sortie de fluide (27) la vanne comprenant en outre un manchon perforé (23) par le biais duquel le fluide s'écoule du canal d'entrée de fluide (29) dans le canal de sortie de fluide (27), si en cours d'utilisation le corps de vanne (22) permet au fluide de s'écouler du canal d'entrée de fluide (29) dans le canal de sortie de fluide (27), dans lequel au moins certaines perforations (30) du manchon (23) ont une orientation au moins partiellement tangentielle par rapport à un axe longitudinal du manchon, de telle sorte que le flux de fluide multiphase est amené à tourbillonner à l'intérieur du canal de sortie de fluide (27) et que les gouttelettes de liquide sont amenées à tourbillonner vers la périphérie externe du canal de sortie de fluide (27) et à coalescer en des gouttelettes de liquide élargies.

7. Système selon la revendication 6, dans lequel un ensemble de séparation gaz-liquide (39) est relié au canal de sortie (27) de la vanne d'étranglement, dans lequel ensemble les phases liquide et gazeuse du fluide évacué par la vanne sont au moins partiellement séparées.

8. Système selon la revendication 5, dans lequel le système comprend en outre un compresseur d'alimentation et un refroidisseur d'air qui sont disposés en amont du premier échangeur thermique (1) de l'au moins un ensemble échangeur thermique.

9. Système selon la revendication 5, dans lequel le système est doté de moyens de régulation de température qui sont configurés pour maintenir la température à l'intérieur d'une entrée du dispositif de dilatation et de séparation cyclonique entre -20 et -60 degrés Celsius.

*FIG. 1*

FIG.2A

FIG.2B

FIG.2C

FIG.2D

**EP 1 851 495 B1**

**REFERENCES CITED IN THE DESCRIPTION**

**Patent documents cited in the description**

- EP 0182643 A
- US 4061481 A
- US 4140504 A
- US 4157904 A
- US 4171964 A
- US 4278457 A

- US 3296807 A
- WO 03029739 A
- EP 1017465 A
- US 6524368 B
- US 6776825 B
- WO 2004083691 A